# EUROPÄISCHE PATENTSCHRIFT

(11) **EP 2 644 005 B1**
(45) Veröffentlichungstag und Bekanntmachung des Hinweises auf die Patenterteilung: **24.09.2014**
(21) Anmeldenummer: 11776705.3
(22) Anmeldetag: 24.10.2011
(51) Int. Cl.: H05B 3/10, B60J 1/00, B60R 11/04, H04N 5/225, B60R 11/00

(54) **ANORDNUNG FÜR EIN BILDERFASSUNGSGERÄT IN EINEM FAHRZEUG**
ARRANGEMENT FOR AN IMAGE RECORDING DEVICE IN A VEHICLE
DISPOSITIF POUR APPAREIL DE CAPTURE D'IMAGE DANS UN VÉHICULE

(30) Priorität: 26.11.2010 DE 102010052472
(43) Veröffentlichungstag der Anmeldung: 02.10.2013
(73) Patentinhaber: Volkswagen Aktiengesellschaft, 38436 Wolfsburg (DE); Calesco Foil, 734 51 Kolbäck (SE)
(72) Erfinder: HACKER, Roland, 38550 Isenbüttel (DE); JACOBSEN, Kjell, S-633 62 Eskilstuna (SE); OHLSSON, Pär, S-734 51 Kolbäck (SE)
(86) Internationale Anmeldenummer: PCT/EP2011/005354
(87) Internationale Veröffentlichungsnummer: WO 2012/069115

(56) Entgegenhaltungen:
- EP-A2- 1 605 729
- DE-A1-102007 004 953
- DE-A1-102008 050 320
- DE-U1-202004 007 360

## Beschreibung

Die vorliegende Erfindung betrifft eine Anordnung für ein Bilderfassungsgerät in einem Fahrzeug mit einem Bilderfassungsgerät zum Aufnehmen von Bilddaten. Die Anordnung umfasst des Weiteren ein Trägerteil, welches bei dem Fahrzeug mit seiner Vorderseite an oder vor der Innenseite einer Fahrzeugscheibe positionierbar ist, Haltemittel zum Halten des Bilderfassungsgeräts, wobei die Haltemittel derart mit dem Trägerteil gekoppelt sind, dass die optische Aufnahmeachse des Bilderfassungsgeräts in einen Bereich vor der Vorderseite des Trägerteils gerichtet ist, sowie eine Heizeinrichtung, wobei diese derart ausgebildet ist, dass die von ihr erzeugte Wärmestrahlung in Richtung des Bereichs vor der Vorderseite des Trägerteils emittiert wird. Die vorliegende Erfindung betrifft ferner ein Verfahren zum Steuern der Heizeinrichtung in einer solchen Anordnung.

Moderne Kraftfahrzeuge werden zunehmend mit Bilderfassungssystemen oder Bildverarbeitungssystemen ausgestattet, um Bilddaten für z.B. Fahrerassistenzsysteme zu liefern. Dabei werden Bilder insbesondere der Umgebung eines Fahrzeugs erfasst und bearbeitet, wobei die verarbeiteten Bilddaten dem Fahrzeugführer oder fahrzeuginternen Systemen vollständig oder in Ausschnitten zur Verfügung gestellt werden.

Das Bilderfassungssystem, beispielsweise eine Digitalkamera, muss dabei derart im Fahrzeug positioniert werden, dass die Bilddaten möglichst gut erfasst werden können. Um dabei auch weitere Anforderungen der Kamerapositionierung im Fahrzeug, insbesondere Platzbedarf und Kosten, zufriedenstellend miteinander zu vereinbaren, sind verschiedene Haltevorrichtungen speziell für diesen Zweck entworfen worden. Insbesondere ist die Positionierung der Kamera direkt an einer Innenscheibe des Fahrzeugs günstig.

Dabei muss dem Problem Rechnung getragen werden, dass der Durchsichtbereich der Kamera durch die Fahrzeugscheibe nicht durch Beschlagen oder Vereisen getrübt oder beeinträchtigt wird. Diesem Problem wird beispielsweise dadurch begegnet, dass an der Haltevorrichtung vorgesehene Heizelemente beim Kontakt der Haltevorrichtung mit der Fahrzeugscheibe diese durch Wärmeleitung aufheizen.

Die DE 10 2008 050 320 A1, gemäß den Oberbegriff des Anspruchs 1, beschreibt eine solche Halterung für verschiedene Geräte, insbesondere Kameras und Sensoren, die für die Montage an der Innenseite einer Windschutzscheibe geeignet ist. In die Halterung kann eine Scheibenheizung integriert sein.

Die DE 20 2004 007 360 U1 beschreibt ein Bildverarbeitungssystem für Kraftfahrzeuge. Im Bereich einer Halterung wird eine Streulichtblende beschrieben, die unter anderem den Streulichteinfall aus dem Fahrzeuginnenraum minimieren soll. Die Streulichtblende kann beweglich oder abnehmbar sein, um ein einfaches Reinigen der dahinterliegenden Fahrzeugscheibe zu ermöglichen. Ferner kann in sie eine Heizung oder eine Hinterlüftung integriert sein.

Die DE 10 2006 007 343 A1 beschreibt eine Bilderfassungseinrichtung für ein Fahrerassistenzsystem, bei dem ein mobiles Kommunikationsgerät, z.B. ein sogenanntes Kamera-Mobiltelefon, lösbar in einer Windschutzscheibenhalteeinrichtung verankert wird. Die Halteeinrichtung kann eine Streulichtblende und/oder ein Heizungs- oder Kühlmodul umfassen, um das mobile Kommunikationsgerät auf möglichst konstanter Temperatur halten zu können. Dabei soll insbesondere verhindert werden, dass sich das mobile Gerät unter der Windschutzscheibe bei Sonneneinstrahlung zu stark erhitzt.

Die DE 10 2007 004953 A1 beschreibt schließlich ein Heizelement für beheizbare Scheiben, wie z. B. Kraftfahrzeugscheiben. Dieses Heizelement kann Bereiche mit unterschiedlicher Heizleistung aufweisen, so dass z. B. im Randbereich eine höhere Heizleistung erzielt wird als in der Mitte des Heizelements.

Es ist die Aufgabe der vorliegenden Erfindung, eine Anordnung für ein Bilderfassungsgerät und ein Verfahren der eingangs genannten Art bereitzustellen, die für ein breites Spektrum von Betriebsbedingungen eine möglichst gute Erfassung von Bilddaten durch eine Fahrzeugsscheibe ermöglicht.

Diese Aufgabe wird erfindungsgemäß durch eine Anordnung mit den Merkmalen des Anspruchs 1 und durch ein Verfahren mit den Merkmalen des Anspruchs 9 gelöst. Vorteilhafte Aus- und Weiterbildungen ergeben sich aus den abhängigen Ansprüchen.

Bei der erfindungsgemäßen Anordnung ist die Heizeinrichtung derart angeordnet und/oder ansteuerbar ist, dass die Strahlungsleistung pro Flächen- oder Längeneinheit für zwei unterschiedliche Flächen- oder Längenabschnitte unterschiedlich ist. Auf diese Weise kann die Heizleistung in Abhängigkeit von der Abstrahlposition und/oder -richtung gesteuert werden und somit an den Wärmebedarf an der zu heizenden Stelle angepasst werden. Durch den Energietransport mittels elektromagnetischer Strahlung im Gegensatz zum Energietransport durch Wärmeleitung ergibt sich für diese Anordnung darüber hinaus der Vorteil, dass eine gleichmäßigere Aufheizung der Fahrzeugscheibe erfolgt. Extreme Temperaturschwankungen, die durch die Kontaktflächen einer Wärmeleitungsheizung verursacht werden, können vermieden werden. Die gleichmäßigere Beheizung ist somit schonender für das Material und kann energiesparender eingesetzt werden.

Die Heizeinrichtung ist erfindungsgemäß auf einer mit dem Trägerteil gekoppelten Streulichtblende angeordnet sein. Die Streulichtblende, die die Bilderfassungseinrichtung insbesondere vor Streulicht aus dem Fahrzeuginnenraum abschirmt, ist dabei typischerweise flächig ausgebildet. Sie kann im Wesentlichen flach ausgebildet sein, wobei die Flächennormalen in einen Bereich vor der Vorderseite des Trägerteils gerichtet sind. Im Allgemeinen wird die Streulichtblende aber typischerweise eine leicht gebogene Form aufweisen. Die Flächennormalen der Streulichtblende sind damit nicht mehr parallel, sind dabei aber wenigstens teilweise auf den Bereich vor der Vorderseite des Trägerteils gerichtet. Hierdurch kann die flächige Eigenschaft der Streulichtblende als besonders geeigneter Ort zur Anbringung der Heizeinrichtung dienen.

Die Heizeinrichtung ist beispielsweise streifenförmig, matrixartig oder flächig auf der Streulichtblende ausgebildet. Je nach Ausgestaltung und Materialwahl der Streulichtblende ist dabei eine Anbringung auf der Vorder- und/oder Rückseite der Streulichtblende möglich. Die Heizeinrichtung kann wenigstens teilweise als Heizfolie ausgebildet sein.

Die Heizeinrichtung kann mittels kostengünstiger Verfahren auf die Streulichtblende aufgetragen werden. Sie kann beispielsweise durch Kleben, Laminieren oder Besputtern mit der Streulichtblende verbunden sein.

Die Streulichtblende selber kann mit dem Trägerteil lösbar verbunden sein, beispielsweise durch eine formschlüssige Verbindung. Hierdurch kann die Streulichtblende einfach und kostengünstig ersetzt werden. Außerdem ist der Bereich vor der Streulichtblende so in einfacher Weise zugänglich, so dass eine davorliegende Fahrzeugscheibe leicht gereinigt werden kann.

Die erfindungsgemäße Anordnung umfasst optional eine Fahrzeugscheibe, wobei die Vorderseite des Trägerteils an oder vor der Innenseite der Fahrzeugscheibe positioniert ist. Dabei kann insbesondere vorgesehen sein, dass die von der Heizeinrichtung erzeugte Strahlungsleistung derart ansteuerbar ist, dass in einem Bereich auf der Fahrzeugscheibe, der vor der Vorderseite des Trägerteils liegt, im Wesentlichen eine homogene Strahlungsleistung pro Flächeneinheit empfangbar ist. Insbesondere kann dabei die konkrete Anordnungsgeometrie der Heizeinrichtung in Bezug zur Fahrzeugscheibe oder den zu heizenden Einrichtungen berücksichtigt werden. Damit kann auch dann eine gleichmäßige Beheizung der Fahrzeugscheibe erreicht werden, wenn es zwei Punkte auf der Heizeinrichtung gibt, deren kürzeste Abstände zu der Fahrzeugscheibe sich voneinander unterscheiden.

Die von der Heizeinrichtung erzeugte Wärmestrahlung pro Flächeneinheit kann beispielsweise bereichsweise aufgrund einer unterschiedlichen Leitungsdichte und/oder aufgrund unterschiedlicher Leitungsdicken unterschiedlich sein. Durch eine höhere Anzahl von elektrischen Leiterbahnen, auch in der Ausführung als Heizfolie, wird eine höhere Wärmeentwicklung pro Flächeneinheit und damit eine größere Wärmestrahlung erzielt. Auch durch die Variation des Leiterquerschnitts kann ein solcher Effekt erzielt werden, da bei dünneren Leiterquerschnitten bei ansonsten gleichen Bedingungen ein höherer spezifischer Leitungswiderstand pro Längeneinheit resultiert, so dass durch den erhöhten Ohmschen Widerstand mehr elektrische Energie pro Längeneinheit in Wärme umgewandelt wird.

Bei dem erfindungsgemäßen Verfahren zum Steuern einer Heizeinrichtung für eine Anordnung mit einem Bilderfassungsgerät in einem Fahrzeug ist die optische Aufnahmeachse des Bilderfassungsgeräts in einen Bereich auf der Fahrzeugscheibe gerichtet, wobei das Bilderfassungsgerät Bilddaten aufnimmt oder zur Aufnahme bereit ist. Eine Heizeinrichtung ist derart ausgebildet, dass die von ihr erzeugte Wärmestrahlung in Richtung des Bereichs auf der Fahrzeugscheibe emittiert wird. Das erfindungsgemäße Verfahren ist dadurch gekennzeichnet, dass die Heizeinrichtung derart angesteuert wird, dass in dem Bereich auf der Fahrzeugscheibe im Wesentlichen eine homogene Strahlungsleistung pro Flächeneinheit empfangen wird. Zum Durchführen des erfindungsgemäßen Verfahrens kann insbesondere die erfindungsgemäße Anordnung verwendet werden.

Das Ansteuern der Heizeinrichtung kann beispielsweise durch mehrere separat gesteuerte, sich teilweise überlagerte Leitungsstromkreise erfolgen. Durch ein gemäß der Erfindung bereichsweise unterschiedliches Ansteuern der Heizeinrichtung kann auch dann eine homogene Strahlungsleistung pro Flächeneinheit auf einer dahinterliegenden Fahrzeugscheibe erzielt werden, wenn ein bestimmter Trägerteil-Typ an verschiedenen Positionen von Fahrzeugscheiben oder in verschiedenen Fahrzeugmodellen eingesetzt wird. Die sich daraus ergebenden Unterschiede in der Anordnungsgeometrie und im Abstand einzelner Punkte auf der Heizeinrichtung in Bezug zur Fahrzeugscheibe können durch das erfindungsgemäße Verfahren kompensiert werden.

Erfindungsgemäß ist des Weiteren ein Fahrzeug mit der vorstehend beschriebenen Anordnung für ein Bilderfassungsgerät ausgestattet.

Die Erfindung wird nun anhand von Ausführungsbeispielen mit Bezug zu den Figuren näher erläutert.
- Figur 1: zeigt eine perspektivische Ansicht einer Halteplatte mit einer Streulichtblende einer erfindungsgemäßen Anordnung für ein Bilderfassungsgerät,
- Figur 2: zeigt die der Fahrzeugscheibe abgewandte Rückseite der Halteplatte aus der Figur 1 mit einer Streulichtblende, die mit einer flächigen Heizfolie ausgestattet ist, gemäß einem Ausführungsbeispiel der erfindungsgemäßen Anordnung für ein Bilderfassungsgerät,
- Figur 3: zeigt die der Fahrzeugscheibe zugewandte Vorderseite der in der Figur 2 gezeigten Halteplatte und
- Figur 4: zeigt schematisch eine Schnittansicht eines Ausführungsbeispiels der erfindungsgemäßen Anordnung an der Innenseite der Windschutzscheibe eines Fahrzeugs.

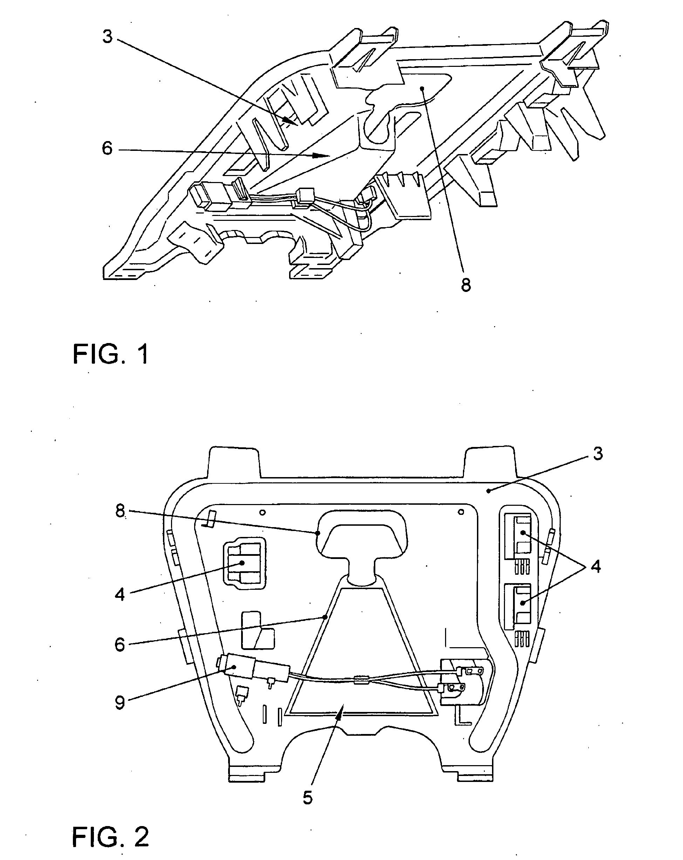

In der Figur 1 ist perspektivisch die Rückseite einer Halteplatte 3 gezeigt, welche in einer Anordnung für eine Multifunktionskamera 1 (nicht dargestellt) in einem Fahrzeug gemäß einem Ausführungsbeispiel der Erfindung als Trägerteil verwendet werden kann. Die Halteplatte 3 umfasst eine Öffnung 8, durch die die Multifunktionskamera 1 Bilder aus der Richtung der Vorderseite der Halteplatte 3 aufnehmen kann.

Um Streulichtlichteinfall aus dem Innern des Fahrzeugs zu minimieren, ist der an die Öffnung 8 angrenzte Bereich mit einer Streulichtblende 6 abgedeckt. Die Streulichtblende 6 ist dabei lösbar mit der Halteplatte 3 verbunden und wird beispielsweise durch eine formschlüssige Verbindung in diese eingeclipst. Die Halteplatte 3 ist aus einem formstabilen Kunststoff gefertigt und kann beispielsweise an die Innenseite einer Fahrzeugscheibe geklebt werden.

In den Figuren'2 und 3 ist die Vorderseite beziehungsweise die Rückseite der in der Figur 1 gezeigten Halteplatte 3 in größerer Detailtiefe dargestellt. Die Vorderseite ist dabei der Fahrzeugscheibe zugewandt und die Rückseite der Fahrzeugseite abgewandt, wenn die Halteplatte 3 gemäß der erfindungsgemäßen Anordnung an oder vor der Innenseite einer Fahrzeugscheibe positioniert wird.

Die Halteplatte 3 umfasst mehrere Einrastspangen 4 zum Halten der Multifunktionskamera 1 (nicht dargestellt), damit ihre optische Aufnahmeachse 2 durch die Öffnung 8 in einen Bereich vor der Vorderseite der Halteplatte 3 ausrichtbar ist.

Auf der Rückseite der lösbar befestigten Streulichtblende 6 ist eine Heizfolie 5 auflaminiert, die über elektrische Anschlüsse 9 mit elektrischer Energie versorgt werden kann. Alternativ können anstelle der Heizfolie 5 auch andere Heizeinrichtungen vorgesehen sein. Insbesondere kann es sich um ein feinmaschiges Metallgitter oder -netz handeln, das z.B. durch Kleben mit der Streulichtblende 6 verbunden ist. Die Heizeinrichtung 5 kann auch durch Besputtern flächig auf die Streulichtblende 6 aufgetragen sein. Die Streulichtblende 6 kann auf der Vorderseite und/oder der Rückseite über eine Heizeinrichtung 5 verfügen. Die elektrisch gespeiste Heizfolie 5 entwickelt eine Wärmestrahlung, die insbesondere in Richtung der Flächennormalen der Streulichtblende 6 abgestrahlt wird.

Einzelne Bereiche der Heizfolie 5 sind dabei derart ausgebildet, dass die Wärmeentwicklung pro Flächen- oder Längeneinheit für unterschiedliche Flächen- oder Längenabschnitte unterschiedlich sind. Dies kann entweder vorrichtungstechnisch dadurch realisiert werden, dass die Dichte der elektrischen Leitungen in der Heizeinrichtung 5 zweier Bereiche unterschiedlich ist, so dass bei einer einheitlichen Spannungsversorgung die Wärmeentwicklung proportional zur Leitungsdichte ist. Ferner kann die Leitungsdicke an verschiedenen Stellen unterschiedlich sein, so dass an Stellen mit dünneren Leitungen ein höherer Ohmscher Widerstand zu einer höheren Erwärmung führt. Insbesondere kann die Stromzufuhr über die elektrischen Anschlüsse 9 aber auch verfahrenstechnisch geregelt werden, dass unterschiedliche Bereiche der Heizeinrichtung 5 eine unterschiedliche Temperatur erreichen und damit in unterschiedlichem Maße Wärme abstrahlen.

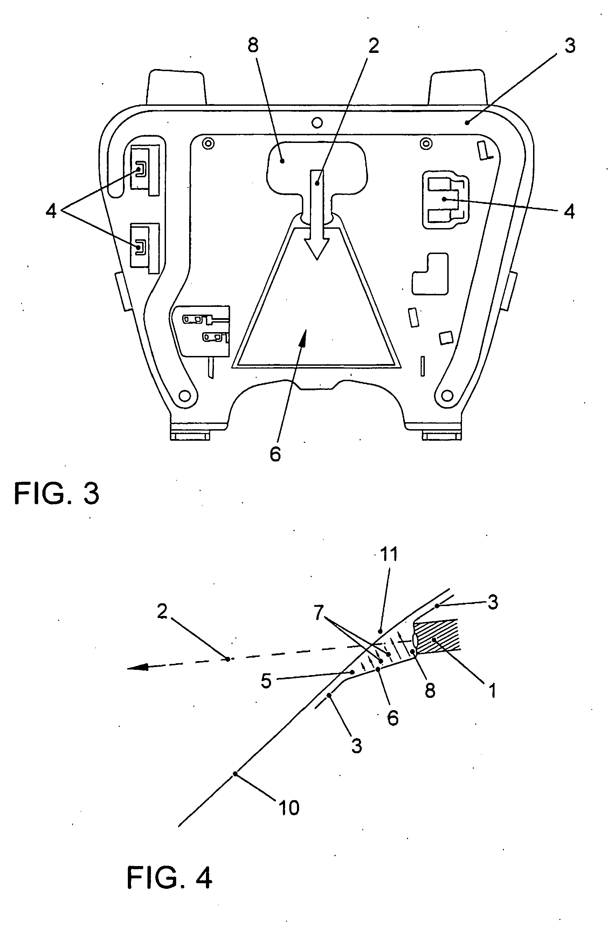

In der Figur 4 ist schematisch eine Schnittansicht eines Ausführungsbeispiels der erfindungsgemäßen Anordnung an der Innenseite einer Windschutzscheibe 10 eines Fahrzeugs dargestellt. Die Halteplatte 3 kann dabei an der Innenseite der Windschutzscheibe 10 befestigt werden, so dass die Multifunktionskamera 1 durch die Öffnung 8 entlang der optischen Aufnahmeachse 2 Bilder in Vorausrichtung des Fahrzeugs erfassen kann. Die Streulichtblende 6 ist flächig mit einer Heizfolie 5 ausgestattet, so dass in Richtung der Flächennormalen 7 der Streulichtblende 6 Wärmestrahlung in einen Bereich 11 der Windschutzscheibe 10 emittiert werden, durch welchen die Multifunktionskamera 1 Bilddaten aufnimmt.

Die Heizfolie 5 kann derart elektrisch angesteuert werden, dass der der Streulichtblende 6 gegenüberliegende Bereich 11 der Windschutzscheibe 10 im Wesentlichen dieselbe Strahlungsleistung pro Flächeneinheit empfängt. Insbesondere werden die Bereiche der Heizfolie 5, die näher an der Windschutzscheibe 10 liegen, weniger stark elektrisch geheizt als die Bereiche, die weiter von der Windschutzscheibe 10 entfernt sind. Auf diese Weise wird eine gleichmäßige Temperatur in dem Bereich 11 der Windschutzscheibe 10 erzielt, so dass dieser Bereich 11 schnell, präzise und energiesparend beheizt werden kann, ohne durch lokale Überhitzungen gegebenenfalls schädliche Materialspannungen in der Windschutzscheibe 10 oder an der Halteplatte 3 zu verursachen. Auf diese Weise kann verhindert werden, dass der Bereich 11 der Windschutzscheibe 10 beschlägt oder vereist.

## Patentansprüche

1. Anordnung für ein Bilderfassungsgerät (1) in einem Fahrzeug mit
- einem Bilderfassungsgerät (1) zum Aufnehmen von Bilddaten
- einem Trägerteil (3), welches bei dem Fahrzeug mit seiner Vorderseite an oder vor der Innenseite einer Fahrzeugscheibe (10) positionierbar ist,
- Haltemitteln (4) zum Halten des Bilderfassungsgeräts (1), wobei die Haltemittel (4) derart mit dem Trägerteil (3) gekoppelt sind, dass die optische Aufnahmeachse (2) des Bilderfassungsgeräts (1) in einen Bereich (11) vor der Vorderseite des Trägerteils (3) gerichtet ist, und
- einer Heizeinrichtung (5), wobei diese derart ausgebildet ist, dass die von ihr erzeugte Wärmestrahlung in Richtung des Bereichs (11) vor der Vorderseite des Trägerteils (3) emittiert wird, **dadurch gekennzeichnet, dass** Heizeinrichtung (5) derart angeordnet und/oder ansteuerbar ist, dass die Strahlungsleistung pro Flächen- oder Längeneinheit für zwei unterschiedliche Flächen- oder Längenabschnitte unterschiedlich ist, und
- dass die Heizeinrichtung (5) auf einer mit dem Trägerteil (3) gekoppelten Streulichtblende (6) angeordnet ist.

2. Anordnung nach Anspruch 1,
**dadurch gekennzeichnet,**
**dass** die Heizeinrichtung (5) streifenförmig, matrixartig oder flächig auf der Streulichtblende (6) ausgebildet ist.

3. Anordnung nach Anspruch 1 oder 2,
**dadurch gekennzeichnet,**
**dass** die Heizeinrichtung (5) durch Kleben, Laminieren oder Besputtern mit der Streulichtblende (6) verbunden ist.

4. Anordnung nach einem der vorangegangenen Ansprüche,
**dadurch gekennzeichnet,**
**dass** die Heizeinrichtung (5) wenigstens teilweise als Heizfolie ausgebildet ist.

5. Anordnung nach einem der vorangegangenen Ansprüche,
**dadurch gekennzeichnet,**
**dass** die Anordnung eine Fahrzeugscheibe (10) umfasst, wobei die Vorderseite des Trägerteils (3) an oder vor der Innenseite der Fahrzeugscheibe (10) positioniert ist.

6. Anordnung nach Anspruch 5,
**dadurch gekennzeichnet,**
**dass** es zwei Punkte auf der Heizeinrichtung (5) gibt, deren kürzeste Abstände zu der Fahrzeugscheibe (10) sich voneinander unterscheiden.

7. Anordnung nach einem der Ansprüche 5 oder 6,
**dadurch gekennzeichnet,**
**dass** die von der Heizeinrichtung (5) erzeugte Strahlungsleistung derart ansteuerbar ist, dass in einem Bereich (11) auf der Fahrzeugscheibe (10), der vor der Vorderseite des Trägerteils (3) liegt, im Wesentlichen eine homogene Strahlungsleistung pro Flächeneinheit empfangbar ist.

8. Anordnung nach einem der vorangegangenen Ansprüche,
**dadurch gekennzeichnet,**
**dass** die von der Heizeinrichtung (5) erzeugte Wärmestrahlung pro Flächeneinheit aufgrund unterschiedlicher Leitungsdichte und/oder Leitungsdicke bereichsweise unterschiedlich ist.

9. Verfahren zum Steuern einer Heizeinrichtung für eine Anordnung, nach einem der vorangegangenen Ansprüche, mit einem Bilderfassungsgerät (1) in einem Fahrzeug, bei welchem
- die optische Aufnahmeachse (2) des Bilderfassungsgeräts (1) in einen Bereich (11) auf eine Fahrzeugscheibe (10) gerichtet ist,
- das Bilderfassungsgerät (1) Bilddaten aufnimmt oder zur Aufnahme von Bilddaten bereit ist und
- mittels der Heizeinrichtung Wärmestrahlung in Richtung des Bereichs (11) auf der Fahrzeugscheibe (10) emittiert wird,
**dadurch gekennzeichnet,**
- **dass** die Heizeinrichtung (5) derart angesteuert wird, dass in dem Bereich (11) auf der Fahrzeugscheibe (10) im Wesentlichen eine homogene Strahlungsleistung pro Flächeneinheit empfangen wird.

## Claims

1. Arrangement for an image recording device (1) in a vehicle, comprising
- an image recording device (1) for recording image data
- a carrier part (3), which can be positioned on the vehicle with its front side on or in front of the inner side of a vehicle window (10),
- holding means (4) for holding the image recording device (1), the holding means (4) being coupled to the carrier part (3) in such a way that the optical recording axis (2) of the image recording device (1) is directed into an area (11) in front of the front side of the carrier part (3), and
- a heating device (5), said heating device being formed in such a way that the thermal radiation produced by it is emitted in the direction of the area (11) in front of the front side of the carrier part (3),
**characterized in that** the heating device (5) is arranged and/or can be activated in such a way that the radiant power per unit area or unit length is different for two different portions of area or portions of length, and
- **in that** the heating device (5) is arranged on a baffle plate (6) coupled to the carrier part (3).

2. Arrangement according to Claim 1, **characterized in that** the heating device (5) is formed on the baffle plate (6) in the form of a strip, in the manner of a matrix or two-dimensionally.

3. Arrangement according to Claim 1 or 2, **characterized in that** the heating device (5) is connected to the baffle plate (6) by adhesive bonding, lamination or sputtering.

4. Arrangement according to one of the preceding claims, **characterized in that** the heating device (5) is formed at least partially as a heating foil.

5. Arrangement according to one of the preceding claims, **characterized in that** the arrangement comprises a vehicle window (10), the front side of the carrier part (3) being positioned on or in front of the inner side of the vehicle window (10).

6. Arrangement according to Claim 5, **characterized in that** there are two points on the heating device (5) that have different shortest distances from the vehicle window (10) in comparison with each other.

7. Arrangement according to either of Claims 5 and 6, **characterized in that** the radiant power produced by the heating device (5) can be activated in such a way that substantially homogeneous radiant power per unit area can be received in an area (11) on the vehicle window (10) that lies in front of the front side of the carrier part (3).

8. Arrangement according to one of the preceding claims, **characterized in that** the thermal radiation per unit area produced by the heating device (5) is different from area to area on account of a differing line density and/or line thickness.

9. Method for controlling a heating device for an arrangement according to one of the preceding claims, comprising an image recording device (1) in a vehicle, in which
- the optical recording axis (2) of the image recording device (1) is directed into an area (11) on a vehicle window (10),
- the image recording device (1) records image data or is ready for recording image data and
- thermal radiation is emitted by means of the heating device in the direction of the area (11) on the vehicle window (10),
**characterized**
- **in that** the heating device (5) is activated in such a way that substantially homogeneous radiant power per unit area is received in the area (11) on the vehicle window (10).

## Revendications

1. Arrangement pour un appareil d'acquisition d'images (1) dans un véhicule, comprenant
- un appareil d'acquisition d'images (1) destiné à enregistrer des données d'image,
- une partie porteuse (3) qui peut être positionnée au niveau du véhicule avec son côté avant sur ou devant le côté intérieur d'une vitre de véhicule (10),
- des moyens de maintien (4) destinés à maintenir l'appareil d'acquisition d'images (1), les moyens de maintien (4) étant accouplés avec la partie porteuse (3) de telle sorte que l'axe d'enregistrement optique (2) de l'appareil d'acquisition d'images (1) est orienté dans une zone (11) devant le côté avant de la partie porteuse (3), et
- un dispositif de chauffage (5), celui-ci étant configuré de telle sorte que le rayonnement thermique qu'il produit est émis en direction de la zone (11) devant le côté avant de la partie porteuse (3), **caractérisé en ce**
- **que** le dispositif de chauffage (5) est disposé et/ou peut être commandé de telle sorte que la puissance de rayonnement par unité de surface ou de longueur pour deux portions différentes de surface ou de longueur est différente, et
- **que** le dispositif de chauffage (5) est disposé sur un diaphragme contre la lumière diffusée (6) accouplé avec la partie porteuse (3).

2. Arrangement selon la revendication 1, **caractérisé en ce que** le dispositif de chauffage (5) est réalisé en forme de bande, sous la forme d'une matrice ou à plat sur le diaphragme contre la lumière diffusée (6).

3. Arrangement selon la revendication 1 ou 2, **caractérisé en ce que** le dispositif de chauffage (5) est relié avec le diaphragme contre la lumière diffusée (6) par collage, laminage ou pulvérisation cathodique.

4. Arrangement selon l'une des revendications précédentes, **caractérisé en ce que** le dispositif de chauffage (5) est au moins partiellement réalisé sous la forme d'un film chauffant.

5. Arrangement selon l'une des revendications précédentes, **caractérisé en ce que** l'arrangement inclut une vitre de véhicule (10), le côté avant de la partie porteuse (3) étant positionné sur ou devant le côté intérieur de la vitre de véhicule (10).

6. Arrangement selon la revendication 5, **caractérisé en ce qu'**il existe sur le dispositif de chauffage (5) deux points dont les écarts les plus courts par rapport à la vitre de véhicule (10) sont différents l'un de l'autre.

7. Arrangement selon l'une des revendications 5 et 6, **caractérisé en ce que** la puissance de rayonnement générée par le dispositif de chauffage (5) peut être commandée de telle sorte qu'une puissance de rayonnement essentiellement homogène par unité de surface peut être reçue dans une zone (11) sur la vitre de véhicule (10) qui se trouve devant le côté avant de la partie porteuse (3).

8. Arrangement selon l'une des revendications précédentes, **caractérisé en ce que** le rayonnement thermique par unité de surface généré par le dispositif de chauffage (5) est différent d'une zone à l'autre en raison de la densité de conduite et/ou de l'épaisseur de conduite différente(s).

9. Procédé de commande d'un dispositif de chauffage pour un arrangement selon l'une des revendications précédentes avec un appareil d'acquisition d'images (1) dans un véhicule, procédé selon lequel
- l'axe d'enregistrement optique (2) de l'appareil d'acquisition d'images (1) est orienté dans une zone (11) sur une vitre de véhicule (10),
- l'appareil d'acquisition d'images (1) enregistre des données d'image ou est prêt à enregistrer des données d'image et
- un rayonnement thermique est émis à l'aide du dispositif de chauffage en direction de la zone (11) sur la vitre de véhicule (10),
**caractérisé en ce**
- **que** le dispositif de chauffage (5) est commandé de telle sorte qu'une puissance de rayonnement essentiellement homogène par unité de surface est reçue dans la zone (11) sur la vitre de véhicule (10).
